# EUROPÄISCHE PATENTSCHRIFT

(11) **EP 1 125 630 B1**
(45) Veröffentlichungstag und Bekanntmachung des Hinweises auf die Patenterteilung: **28.09.2005**
(21) Anmeldenummer: 01102955.0
(22) Anmeldetag: 08.02.2001
(51) Int. Cl.: B01J 19/00, F28D 9/00, B01F 13/00, B01F 5/06, B32B 31/00, F28F 3/04

(54) **Mikroreaktor mit verbessertem Wärmetauscher**
Microreactor with improved heat exchanger
Microréacteur avec échangeur de chaleur amelioré

(30) Priorität: 14.02.2000 DE 10006476
(43) Veröffentlichungstag der Anmeldung: 22.08.2001
(73) Patentinhaber: CPC Cellular Process Chemistry Systems GmbH, 55130 Mainz (DE)
(72) Erfinder: Schwalbe, Thomas, Dr., 61118 Bad Vilbel (DE); Oberbeck, Sebastian, 35781 Weilburg (DE)
(74) Vertreter: Kompter, Hans-Michael

(56) Entgegenhaltungen:
- WO-A-98/55812
- WO-A-99/41015
- US-A- 5 534 328
- US-A- 5 843 385

## Beschreibung

Die Erfindung bezieht sich auf ein als Wärmeaustauscher einzusetzendes Funktionsmodul (2) für einen Mikroreaktor zur Durchführung chemischer Reaktionen von mindestens 2 Reaktanden, dadurch gekennzeichnet, dass es
(a) auf der oberen Schicht (2a) mindestens 2 voneinander getrennte Systeme von Rillen (30a, 30b) aufweist, die jeweils unabhängig voneinander mit mindestens zwei Wärmeaustauschermedien mit unterschiedlicher Temperatur beschickt werden können, und
(b) auf der unteren Schicht (2b) mindestens 2 voneinander getrennte Systeme von Rillen (40a, 40b) aufweist, die parallel zu den Rillen auf der oberen Schicht verlaufen und jeweils unabhängig voneinander mit mindestens zwei gasförmigen und/oder fluiden Reaktanten beschickt werden können
sowie einen Miktroreaktor enthaltend solch einen Wärmeaustauscher.

Ein solcher Mikroreaktor stellt ein miniaturisiertes Reaktionssystem für die Verfahrenstechnik und die chemische Prozesstechnik dar. Ein Mikroreaktor der oberbegrifflichen Art ist zum Beispiel aus der EP 0 688 242 B 1 bekannt. Dieser Mikroreaktor wird aus einer Vielzahl von aufeinandergestapelten und miteinander verbundenen Plättchen aufgebaut, auf deren Oberflächen sich mikromechanisch erzeugte Strukturen befinden, die in ihrem Zusammenwirken Reaktionsräume bilden, um jeweils erwünschte chemische Reaktionen auszuführen. Es ist wenigstens ein durch das System hindurchführender Kanal enthalten, der mit dem Einlass und dem Auslass verbunden ist. Die einzelnen Plättchen können unterschiedlich temperiert werden, jedoch ist es nicht möglich, zwei Reaktanten bei verschiedenen Temperaturen einzuleiten. In der präparativen organischen Chemie ist eine Vielzahl von Reaktionen bekannt, bei denen der eine Reaktant hochreaktiv und zersetzlich ist und daher bei niedrigen Temperaturen (zwischen - 100°C und 0°C) vorgelegt wird, und der zweite Reaktant bei erhöhter Temperatur (zwischen 20°C und 180°C) hinzudosiert wird.

Der Erfindung liegt die Aufgabe zugrunde, ein Mikroreaktorsystem zu schaffen, das eine einfache unterschiedlich präprozessuale Temperierung zweier Reaktanten ermöglicht. Der Mikroreaktor soll eine exakte Temperaturführung der Reaktionsprozesse und je nach Wunsch in unterschiedlichen Bereichen gezielte laminare oder turbulente Strömungen zu erzeugen. Der Mikroreaktor soll ferner preiswert herstellbar sein, um gegebenenfalls im Einwegsystem verwendet zu werden. Es soll aber auch der Aufbau unterschiedlicher Anordnungen, Geometrien und/oder Größen des Reaktors möglich sein, um Verfahrensweisen unter Laborbedingungen bis zur Vorserienproduktion und Kleinserienproduktion studieren zu können.

Die gestellte Aufgabe wird aufgrund der Merkmale des Anspruchs 1 gelöst und durch die weiteren Merkmale der Unteransprüche ausgestaltet und weiterentwickelt. Im einzelnen werden Funktionsmodule gebildet, die sich im Hinblick auf die durchzuführende chemische Prozessführung geeignet zusammenstellen lassen und gegebenenfalls lösbar miteinander verbunden werden. Die modulare Bauweise ermöglicht eine einfache Anpassung an die jeweils auftretenden Bedingungen auch wechselnder Art, indem einzelne Elemente des Mikroreaktors austauschbar sind, wenn sich die erhofften Ergebnisse nicht einstellen oder wenn Defekte auftreten.

Durch Austausch von Komponenten kann man die Fluidführung schließlich so dimensionieren, dass sich eine verbesserte Temperaturführung der Reaktionen einstellt, oder dass eine höhere Selektivität und eine verringerte Bildung unerwünschter Nebenreaktionsprodukte beobachtet wird, d.h. dass man das erwünschte Produkt mit weniger Verunreinigungen erhält.

Die Dimensionen und Formgebung des erfindungsgemäßen Mikroreaktors sind an sich unkritisch. Definitionsgemäß ist bei einem Mikroreaktor die Abmessung mindestens einer Komponente kleiner als 1 mm.

Die einzelnen Platten oder Schichten können in jeder geometrischen Form vorliegen. Vorzugsweise sind sie rund, oval, quadratisch oder rechteckig. Quadratische Platten sind im Hinblick auf ihre Positionierbarkeit besonders bevorzugt.

Von grundlegender Bedeutung für richtiges Funktionieren des Mikroreaktors ist die Flüssigkeits- und gasdichte Verbindung zwischen den einzelnen Modulen des Mikroreaktors. Zu diesem Zweck werden Oberflächenbereiche der Platten speziell bearbeitet, die Fluidkanäle werden geeignet geführt und die Anschlüsse so ausgeführt, dass beim Zusammenbau der Module ausreichende Sicherheit vor Leckagen gewährleistet wird.

Während die verfahrenstechnischen Einzeloperationen in den einzelnen Funktionsmodulen vor sich gehen, sind diese durch vertikale Kanäle miteinander verbunden, um das Fluid von Stufe zu Stufe weiterzuverarbeiten. Die Funktionsmodule selbst enthalten horizontale Kanäle und Räume, die für die jeweilig vorgesehenen Prozessschritte zugeschnitten sind. Zwischen den Kanälen und den Räumen gibt es Trennstege, die aufgrund des auf den Stapel der Funktionsmodule ausgeübten Druckes dicht werden. Es ist somit festzustellen, dass für die Zu- und Abfuhr der Reaktanten und der Hilfsmedien vertikale Kanäle zuständig sind, während die Reaktionen selbst in sich horizontal erstreckenden Räumen stattfinden.

Als Material der Platten oder Schichten kommen Metall (Edelstahl), Glas, Keramik, Halbleitermaterial, insbesondere auf der Basis von Silizium, sowie Kunststoffe in Betracht. Die Auswahl dieser Werkstoffe oder von Kombinationen davon richtet sich nach dem vorgesehenen Verwendungszweck. Ganz besonders bevorzugt ist Edelstahl.

Die Erfindung wird anhand der Zeichnung beschrieben. Dabei zeigen:
Fig. 1 die Oberseite der obersten Platte des Mikroreaktors.
Fig. 2 einen Mikroreaktor in schematischer, auseinandergezogener Darstellung.
Fig. 3 eine vergrößerte Oberseite des Wärmeaustauschermoduls des Mikroreaktors für die präprozessuale Behandlund der Reaktanten.
Fig. 4 eine vergrößerte Unterseite des Wärmeaustauschermoduls mit der Funktion der Eduktführung.
Fig. 5 einen Längsschnitt durch dieses Wärmeaustauschermodul.

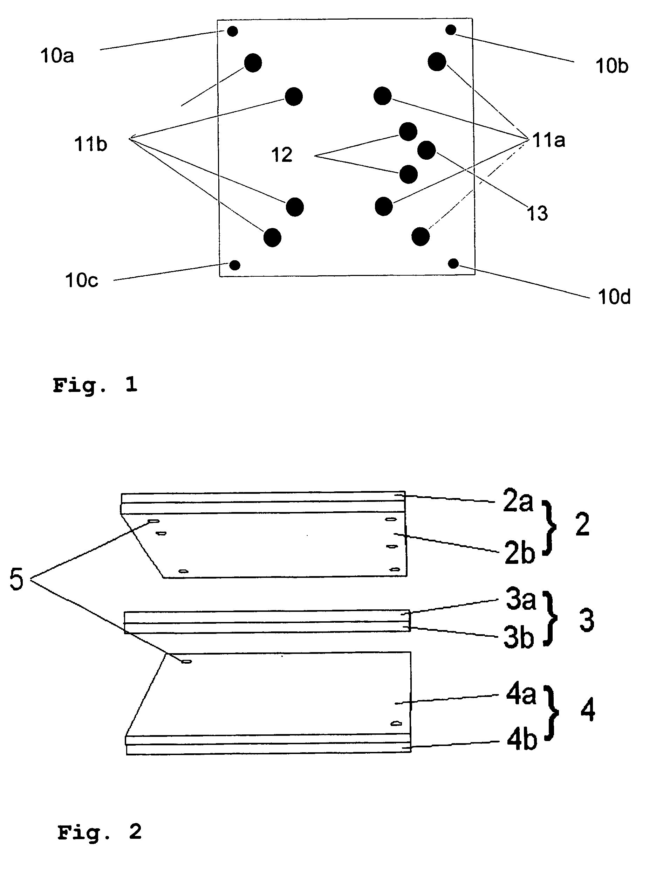

In dem in Fig. 1 gezeigten obersten Blech 1 befinden sich insgesamt fünfzehn Bohrungen, von denen jeweils eine in den vier Ecken des Bleches positioniert sind (10). Diese weisen einen Durchmesser von 0,75 bis 1,5 mm auf und sind deutlich kleiner als die übrigen elf Bohrungen (11a, 11b, 12, 13). Die kleinen Bohrungen dienen der Aufnahme von Positionierstiften, mit denen die Bleche zueinander und zu den zuführenden Anschlüssen ausgerichtet werden können. Diese Bohrungen finden sich demnach an gleicher Stelle auch in den folgenden Blechen. Die übrigen Bohrungen des obersten Bleches haben einen Durchmesser von 1,7 bis 2,5 mm und dienen der Zu- (11a) und Abführung (11b) der Wärmeaustauschermedien, der Zuführung der Reaktanten (12) und der Abführung des Produktes (13).

Zwischen dem in Fig. 2 nicht gezeigten obersten Blech 1 und einem nicht gezeigten untersten Blech sind mehrere Funktionsmodule (2, 3, 4) angeordnet, die nach dem Zusammenbau miteinander verbunden sind oder unter Druck so zusammen gehalten werden, dass Abdichtflächen zwischen den Modulen zusammengepresst werden. Jedes Funktionsmodul (2, 3, 4) enthält eine Modulhälfte (2a, 2b, 3a, 3b, 4a, 4b), die gegebenenfalls jeweils rahmenartig gestaltet sind, um Abdichtflächen darzubieten, die beim Aufeinanderpressen der Hälften abdichten. Die im Deckel angebrachten Fluidanschlüsse, setzen sich in Fluidkanälen (5) durch die einzelnen Funktionsmodule fort. Von dort gibt es horizontale Kanäle zu Funktionsräumen, die in der Regel ein Kanalsystem oder Labyrinthsystem beinhalten. Die Kanäle der Funktionsräume laufen im allgemeinen schräg oder quer zueinander.

Die aus zwei Hälften zusammengebauten Funktionsmodule zeigen an ihren Oberflächen jeweils Öffnungen der Kanäle (5), die in standardisierten Abständen angeordnet sind, um beim Stapelaufbau von Funktionsmodulen genau zueinander zu fluchten. Diese Öffnungen sind mit Dichtstrukturen versehen, um fortlaufende Kanäle (5) abdichtend zu kuppeln. Diese Dichtstrukturen können als zylindrische Stutzen mit kegelförmigen oder sphärischen Abdichtflächen ausgebildet und genügend nachgiebig sein, damit die plattenförmigen Funktionsmodule mit ihrem gesamten Randbereich aufeinander liegen, um den Pressdruck auf die innenliegenden Abdichtflächen zu übertragen.

Im dargestellten Ausführungsbeispiel sei angenommen, dass das Funktionsmodul (2) einen Wärmetauscher darstellt, der aus einer Wärmetauscherhälfte (2a) für zwei Kühl- und/oder Heizmedien und einer Wärmetauscherhälfte (2b) für Reaktantenführung besteht.

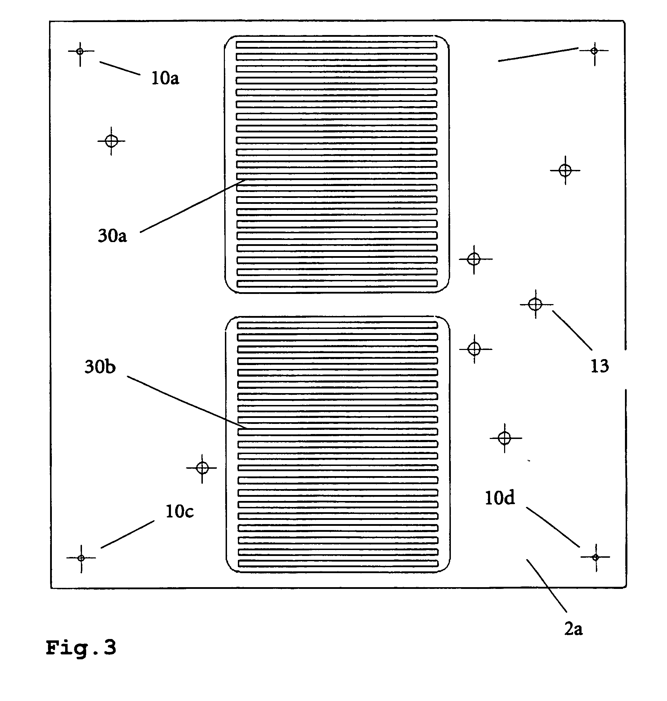

Die in Fig. 3 detailliert dargestellte Wärmetauscherhälfte (2a) ist derart strukturiert, dass sich auf der Oberseite zwei getrennte, nebeneinanderliegende Wärmetauscher (30a, 30b) befinden, die von oben durch das erste Blech hindurch mit Wärmetauschermedien unterschiedlicher Art und/oder Temperatur beschickt werden können.

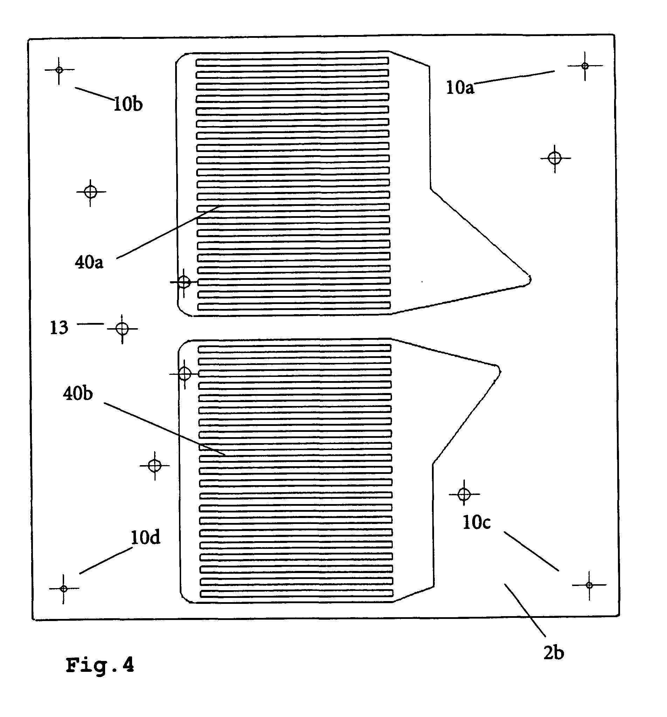

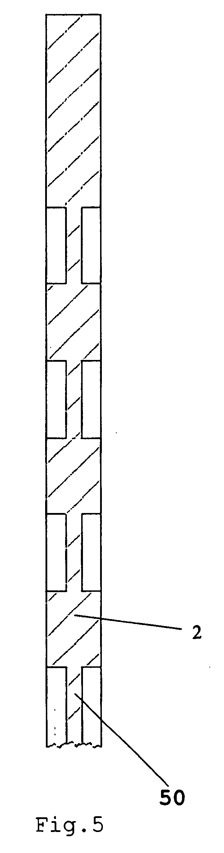

Die in Fig. 4 detailliert dargestellte Wärmetauscherhälfte (2b) ist derart strukturiert, dass hier zwei Edukte, die von oben durch das erste und das zweite Blech hindurchgeführte werden, räumlich voneinander getrennt Entlangfließen können und zwar in Bereichen (40a, 40b), die den auf der Oberseite befindlichen Wärmetauschern gegenüberliegend sind. Die in Fig. 5 detailliert dargestellte Trennwand (50) des Wärmeaustauschers (2) ist sehr dünn (einige µm), so dass die Wärme zwischen dem jeweiligen Edukt und dem entsprechenden Wärmetauschermedium effizient ausgetauscht werden kann. Dieser Bereich wird als Vorwärmetauscher oder Vorwärmbereich bezeichnet, wobei hier sowohl gekühlt als auch geheizt werden kann. Aus dem Vorwärmbereich werden die Wärmetauschermedien nach oben aus dem Mikroreaktor herausgeführt. Die Edukte werden nach unten weiter in den Mikroreaktor geführt.

Das Funktionsmodul 3 sei ein Mischer zum Mischen der Reaktionspartner A und B. Das Funktionsmodul 4 stellt eine Verweilstrecke dar, die aus einer Verweilstreckenhälfte 4a für Reaktionsprodukt und einer Verweilstreckenhälfte 4b für Kühl- und/oder Heizmedium besteht.

Der Mikroreaktor kann auch Durchführungen für Sensoren umfassen, um gewisse Parameter der in den Reaktoren ablaufenden chemischen Prozesse zu erfassen. Als Sensoren kommen vor allem Sensoren für Temperatur, Druck, Strömungsgeschwindigkeit, Volumen- oder Massestrom sowie pH-Wert in Betracht.

Ein weiterer Gegenstand der Erfindung ist ein Prozess zur Herstellung eines erfindungsgemäßen Mikroreaktors zur Durchführung chemischer Reaktionen, welcher folgende Schritte umfasst:
(a) Herstellen von mindestens 3 Platten oder Schichten, deren Oberflächen Mikro- und/oder Feinwerk-technisch so bearbeitet werden, dass sie - zusammen mit der Oberfläche einer weiteren Platte oder Schicht - horizontale Reaktionsräume aufweisen, wobei die erste Platte so ausgestaltet ist, dass jeweils jeder Reaktant einen horizontalen Bereich durchströmt, der mit einem Wärmeaustauschermedium in Kontakt steht, und die Temperatur der jeweiligen Wärmeaustauschermedien unabhängig voneinander eingestellt werden kann;
(b) Positionieren, Stapeln und Verbinden der einzelnen Platten oder Schichten in geeigneter Reihenfolge.

Die Strukturierung bei Schritt (a) kann durch Ätzen, Laser- und Wasserstrahlschneiden und -bohren, Stanzen und Prägen, Fräsen, Hobeln und Bohren, Spritzguss und Sintern sowie Funkenerosiv und mit Kombinationen derselben erfolgen.

Vorzugsweise werden die Bleche der einzelnen Platten oder Schichten durch Ätzen und Laserstrahlschneiden und/oder -bohren hergestellt. Dabei werden die Außenkonturen und die Bohrungen vorzugsweise durch Laserstrahlschneiden bzw. -bohren hergestellt und die Kanalstrukturen vorzugsweise durch Ätzen erzeugt.

Ausgehend von einem Entwurf wird beim Ätzen zuerst eine Maske erstellt, die entweder die Positiv- oder Negativdarstellung der Geometrie beinhaltet. Dann wird auf das Substrat, vorzugsweise ein Metallblech, ein lichtempfindlicher Lack aufgetragen, in der Regel eine wenige µm Dicke Polymethylmethacrylat (PMMA) Schicht, welcher mit Hilfe der Maske und Ultravioletter Strahlung belichtet wird. In den belichteten oder unbelichteten Bereichen (je nach Positiv oder Negativresist) wird mit einem organischen Lösungsmittel, vorzugsweise Aceton, der Lack entfernt. Das so belackte, belichtete und entwickelte Substrat wird in eine entsprechende Ätzlösung getaucht, in der die freiliegenden Flächen dem Ätzangriff solange ausgesetzt werden, bis eine gewünschte Ätztiefe erreicht ist.

Die Lagen müssen derart übereinander gestapelt sein, dass zum einen die Fluidführungen und Trennwände vollständig erhalten bleiben. Zum anderen muss eine völlig flüssigkeits- und gasdichte Verbindung zwischen den einzelnen Lagen erfolgen. Dies kann auf drei Weisen erfolgen, die unterschiedliche Vorraussetzungen bedingen.

### 1. Vakuumlöten

Das Vakuumlöten erfordert das Aufbringen eines Lotes auf die gesamte Oberfläche der Bleche. Dieses Lot kann Kupfer, Silber oder Gold sein und muss mit Rücksicht auf die Verträglichkeit mit den später im Mikroreaktor benutzten Medien ausgewählt werden. Im ersten Schritt werden die Bleche galvanisch mit dem gewählten Lot beschichtet. Im zweiten Schritt werden die gestapelten Bleche in einer Vorrichtung zusammengepresst. In einem Hochvakuumofen werden diese Stapel solange erhitzt bis das Lot schmilzt und sich an der Oberfläche mit den Blechen verbindet. Nach Abkühlen des Ofens erhält man einen fest und gasdicht miteinander verbundenen Stapel. Vorraussetzungen für die erfolgreiche Durchführung sind eine Oberflächenrauheit von nicht mehr als 5µm, die Oberfläche muss sauber und fettfrei sein.

### 2. Diffusionsschweissen

Zunächst werden die Bleche aufeinandergestapelt und fest miteinander verpresst. Dieser Stapel wird dann in einem Vakuumofen erhitzt. Ausgelöst durch den hohen Anpressdruck und die hohen Temperaturen werden Diffusionsvorgänge zwischen den Grenzschichten der Bleche ausgelöst, die für einen materialschlüssigen festen und gasdichten Verbund der Lagen verantwortlich zeichnen. Vorraussetzung für diese Verfahren ist eine Oberflächenrauheit von weniger als 5µm, eine kratzerfreie Oberfläche sowie ein genügend hoher Anpressdruck, so dass der verbleibende Restspalt zwischen gegenüberliegenden Oberflächen im Bereich 1µm liegt. Ebenso wie beim Vakuumlöten müssen die Oberflächen sauber und fettfrei sein. Einfaches Vakuum oder Schutzgasatmosphäre sind ausreichend.

### 3. Pressen

Liegen die Oberflächenrauheiten im Bereich 1µm oder darunter und ist die Oberfläche absolut frei von Kratzern, sauber und fettfrei, so ist es möglich ein gasdichtes Aufeinanderliegen der Bleche durch Ausübung eines gleichmäßigen mechanischen Druckes auf den Stapel zu erreichen. Grundlegend hierfür ist, das der verbleibende Restspalt kleiner als 1µm wird. Dies verursacht eine so hohen Strömungswiderstand zwischen den Platten, dass Fluide zwar geringfügig in den Spalt eintreten können aber keine Lecks darstellen, da keine Strömung, wie sie z.B. in Kapillaren vorkommt entstehen kann.

Der Werkstoff, aus dem die Funktionsmodule bestehen, richtet sich in erster Linie nach den zu verarbeitenden Stoffen und chemischen Prozessen. Allgemein kommen die für die Chemie tauglichen Werkstoffe Edelstahl, Glas, Keramik, Kunststoff und Halbleiterbaustoffe sowie Kombinationen dieser Werkstoffe in Betracht.

Ein weiterer Gegenstand der Erfindung ist ein als Wärmeaustauscher einzusetzendes Funktionsmodul (2) für einen Mikroreaktor zur Durchführung chemischer Reaktionen von mindestens 2 Reaktanden nach einem der Ansprüche 2 bis 8, dadurch gekennzeichnet, dass es
(a) auf der oberen Schicht (2a) mindestens 2 voneinander getrennte Systeme von Rillen aufweist, die jeweils unabhängig voneinander mit mindestens zwei Wärmeaustauschermedien mit unterschiedlicher Temperatur beschickt werden können, und
(b) auf der unteren Schicht (2b) mindestens 2 voneinander getrennte Systeme von Rillen aufweist, die parallel zu den Rillen auf der oberen Schicht verlaufen und jeweils unabhängig voneinander mit mindestens zwei gasförmigen und/oder fluiden Reaktanten beschickt werden können.

Der Werkstoff, aus dem die Funktionsmodule bestehen, richtet sich in erster Linie nach den zu
verarbeitenden Stoffen und chemischen Prozessen. Allgemein kommen die für die Chemie tauglichen Werkstoffe Edelstahl, Glas, Keramik, Kunststoff und Halbleiterbaustoffe sowie Kombinationen dieser Werkstoffe in Betracht.

Aufgrund des erfindungsgemäßen Wärmeaustauschermoduls ist der Anwender in der Lage, vorhandene Mikroreaktoren so anzupassen, dass es möglich ist, sie mit unterschiedlich temperierten Reaktanten zu beschicken. Während hochreaktive, zersetzliche Reaktanten sich bei tiefen Temperaturen, vorzugsweise zwischen -100 °C und 0 °C zuführen lassen, können hochviskose, zähe Reaktanten bei erhöhten Temperarturen, vorzugsweise zwischen 20 °C und 200 °C eingeleitet werden.

Insgesamt wird mit der Erfindung ein modular aufgebautes, miniaturisiertes Reaktionssystem zur Verfügung gestellt, das die Integration verschiedener, für die Prozessführung bedeutsamer Funktionen ermöglicht. Zu diesen Funktionen werden die Zuführung der Reaktanten, deren unterschiedliche präprozessuale Wärmebehandlung, die Zusammenführung der Reaktanten unter kontrollierten thermischen Bedingungen, eine intermediäre thermische Behandlung sowie eine postprozessuale Verweilzeit und die Abfuhr des Reaktionsproduktes in geeignete Vorratsbehälter verstanden.

Weiterhin Gegenstand der Erfindung ist daher ein Verfahren zur Durchführung chemischer Reaktionen von mindestens 2 Reaktanden, die eine unterschiedliche präprozessuale Wärmebehandlung erfordern, wobei zwei oder mehrere chemische Reaktanten in gasförmiger oder fluider Form in den von zwei oder mehreren übereinander gestapelten Platten oder Schichten eines erfindungsgemäßen Mikroreaktors gebildeten horizontalen Räumen getrennt vortemperiert, gemischt und zur Reaktion gebracht werden.

Der Begriff "fluide Form" umfasst sowohl Reaktanten, die selbst bei der eingestellten Temperatur in einem füssigem Aggregatszustand vorkommen, als auch solche Reaktanten, die in einem Gemisch mit einem fluiden Verdünnungsmittel eingesetzt werden. In einer besonders bevozugten Ausführungsform werden mindestens zwei Reaktanten in Gegenwart von mindestens einem Verdünnungsmittel in einem erfindungsgemäßen Mikroreaktor zur Reaktion gebracht. Bevorzugte Verdünnungsmittel sind gegebenenfalls halogenierte aliphatische oder aromatische Kohlenwasserstoffe wie zum Beispiel Hexan, Cyclohexan, Dichlormethan, Tetrachlormethan, Benzol, Toluol oder Chlorbenzol; oder Ether wie zum Beispiel Diethylether, *tert*-Butylmethylether, Dioxan oder Tetrahydrofuran; Ketone oder Amide wie zum Beispiel Aceton, Methylethylketon, Dimethylformamid oder N-Methylpyrrolidon; oder Alkohole wie zum Beispiel Methanol, Ethanol, Propanol, Isopropanol oder Butanol; oder Acetonitril oder Wasser oder Gemische aus diesen Verdünnungsmitteln.

Um das Verständnis der vorliegenden Erfindung zu erleichtern werden die nachfolgenden illustrativen Beispiele für mögliche Reaktionstypen dargelegt. Die vorliegende Erfindung ist nicht beschränkt auf diese spezifischen Ausführungsformen, sondern umfasst den vollen Umfang der Patentansprüche.

Beispiele für erfindungsgemäße Reaktionen sind Umsetzungen von elektrophilen Reaktanten mit nucleophilen Reaktanten, wie zum Beispiel die Reaktion einer metallorganischen Verbindung, insbesondere Alkyllithium oder Alkylmagnesiumhalogenid mit einer Carbonylverbindung unter Ausbildung eines Carbinols, insbesondere wobei die metallorganische Verbindung bei einer Temperatur unterhalb von 0°C und die Carbonylverbindung bei einer Temperatur oberhalb von 0°C zugeführt wird; oder Umsetzungen eines Diens mit einem Dienophil unter Bildung eines Cyclohexens.

## Patentansprüche

1. Als Wärmeaustauscher einzusetzendes Funktionsmodul (2) für einen Mikroreaktor zur Durchführung chemischer Reaktionen von mindestens 2 Reaktanden, **dadurch gekennzeichnet, dass** es
(a) auf der oberen Schicht (2a) mindestens 2 voneinander getrennte Systeme von Rillen (30a, 30b) aufweist, die jeweils unabhängig voneinander mit mindestens zwei Wärmeaustauschermedien mit unterschiedlicher Temperatur beschickt werden können, und
(b) auf der unteren Schicht (2b) mindestens 2 voneinander getrennte Systeme von Rillen (40a, 40b) aufweist, die parallel zu den Rillen auf der oberen Schicht verlaufen und jeweils unabhängig voneinander mit mindestens zwei gasförmigen und/oder fluiden Reaktanten beschickt werden können.

2. Mikroreaktor zur Durchführung chemischer Reaktionen von mindestens 2 chemischen Reaktanten, wobei die chemische Prozessführung in horizontalen Räumen stattfindet, die von drei oder mehreren übereinander gestapelten Platten oder Schichten gebildet werden, wobei besagte Platten oder Schichten (2a, 2b, 3a, 3b, 4a, 4b) so übereinander gestapelt sind, dass sich Kanäle und sich horizontal erstreckende Räume für die chemische Prozessführung bilden, wobei Funktionsmodule (2, 3, 4) gebildet werden, in denen jeweils einzelne physikalische oder chemische Funktionen ausführbar sind, wobei das erste Funktionsmodul (2) als Wärmeaustauscher ausgestaltet ist, **dadurch gekennzeichnet, dass** es
(a) auf der oberen Schicht (2a) mindestens 2 voneinander getrennte Systeme von Rillen (30a, 30b) aufweist, die jeweils unabhängig voneinander mit mindestens zwei Wärmeaustauschermedien mit unterschiedlicher Temperatur beschickt werden können, und
(b) auf der unteren Schicht (2b) mindestens 2 voneinander getrennte Systeme von Rillen (40a, 40b) aufweist, die parallel zu den Rillen auf der oberen Schicht verlaufen und jeweils unabhängig voneinander mit mindestens zwei gasförmigen und/oder fluiden Reaktanten beschickt werden können.

3. Mikroreaktor nach Anspruch 2, **dadurch gekennzeichnet, dass** als Funktionsmodule separate Wärmeaustauscher für die Reaktanten, Mischer, Wärmetauscher für die Zusammenführung der Reaktanten, Verweilstrecken, Filter, Verdampfer, Destillationskolonnen oder Extraktionskolonnen vorgesehen sind.

4. Mikroreaktor nach einem der Ansprüche 2 bis 3, **dadurch gekennzeichnet, dass** die Funktionsmodule vorbereitete vertikale Kanäle(5)zur Verbindung mit benachbarten Funktionsmodulen aufweisen.

5. Mikroreaktor nach einem der Ansprüche 2 bis 4, **dadurch gekennzeichnet, dass** die Funktionsmodule (2, 3, 4) Anschlüsse und/oder Sensoren aufweisen, die zur Erfassung von Prozessparametern, wie Temperatur, Druck, Strömungsgeschwindigkeit, Volumen- oder Massestrom, pH-Wert, entweder in der Gehäusewandung oder in einzelnen Funktionsmodulen untergebracht sind.

6. Mikroreaktor nach einem der Ansprüche 2 bis 5, **dadurch gekennzeichnet, dass** Regelkreise vorgesehen sind, zur Regelung des Materialflusses in den fluidischen Anschlüssen sowie der Energiezufuhr und -abfuhr der Funktionsmodule.

7. Prozess zur Herstellung eines Mikroreaktors zur Durchführung chemischer Reaktionen von mindestens zwei chemischen Reaktanten nach einem der Ansprüche 2 bis 6, welcher folgende Schritte umfasst:
(a) Herstellen von mindestens 3 Platten oder Schichten, deren Oberflächen Mikro- und/oder Feinwerk-technisch so bearbeitet werden, dass sie - zusammen mit der Oberfläche einer weiteren Platte oder Schicht - horizontale Reaktionsräume aufweisen, wobei die erste Platte so ausgestaltet ist, dass jeweils jeder Reaktant einen horizontalen Bereich durchströmt, der mit einem Wärmeaustauschermedium in Kontakt steht, und die Temperatur der jeweiligen Wärmeaustauschermedien unabhängig voneinander eingestellt werden kann;
(b) Positionieren, Stapeln und Verbinden der einzelnen Platten oder Schichten in geeigneter Reihenfolge.

8. Verfahren zur Durchführung chemischer Reaktionen von mindestens 2 Reaktanden, die eine unterschiedliche präprozessuale Wärmebehandlung erfordern, **dadurch gekennzeichnet, dass** ein oder mehrere chemische Reaktanten in gasförmiger oder fluider Form in den von zwei oder mehreren übereinander gestapelten Platten oder Schichten eines Mikroreaktors nach einem der Ansprüche 1 bis 6 gebildeten horizontalen Räumen getrennt vortemperiert, gemischt und zur Reaktion gebracht werden.

## Claims

1. Function module (2) to be employed as heat exchanger for a microreactor for carrying out chemical reactions of at least 2 reactants, **characterized in that** it has
(a) on the upper layer (2a) at least 2 systems of grooves (30a, 30b) separated from one another, each of which can be charged, independently of one another, with at least 2 heat-exchanger media having different temperatures, and
(b) on the lower layer (2b) at least two systems of grooves (40a, 40b) separated from one another, which run parallel to the grooves on the upper layer and can each, independently of one another, be charged with at least two gaseous and/or fluid reactants.

2. Microreactor for carrying out chemical reactions of at least 2 chemical reactants, where the chemical process is carried out in horizontal chambers formed by three or more plates or layers stacked one on top of the other, where the said plates or layers (2a, 2b, 3a, 3b, 4a, 4b) are stacked one on top of the other so as to form channels and horizontally extending chambers for carrying out the chemical process, with formation of function modules (2, 3, 4), in each of which individual physical or chemical functions can be performed, where the first function module (2) is designed as a heat exchanger, **characterized in that** it has
(a) on the upper layer (2a) at least 2 systems of grooves (30a, 30b) separated from one another, each of which can be charged, independently of one another, with at least two heat-exchanger media having different temperatures, and
(b) on the lower layer (2b) at least 2 systems of grooves (40a, 40b) separated from one another, which run parallel to the grooves on the upper layer and can each, independently of one another, be charged with at least two gaseous and/or fluid reactants.

3. Microreactor according to Claim 2, **characterized in that** the function modules provided are separate heat exchangers for the reactants, mixers, heat exchangers for combining the reactants, hold-up zones, filters, evaporators, distillation columns or extraction columns.

4. Microreactor according to one of Claims 2 and 3, **characterized in that** the function modules have prepared vertical channels (5) for connection to adjacent function modules.

5. Microreactor according to one of Claims 2 to 4, **characterized in that** the function modules (2, 3, 4) have connections and/or sensors for recording process parameters, such as temperature, pressure, flow rate, volumetric or mass flow rate or pH, accommodated either in the casing wall or in individual function modules.

6. Microreactor according to one of Claims 2 to 5, **characterized in that** control loops are provided for controlling the material flow in the fluid connections and the input and output of energy into and from the function modules.

7. Process for the production of a microreactor for carrying out chemical reactions of at least two chemical reactants according to one of Claims 2 to 6, which comprises the following steps:
(a) production of at least 3 plates or layers whose surfaces are micro- and/or precision engineered in such a way that they - together with the surface of a further plate or layer - have horizontal reaction chambers, where the first plate is designed in such a way that in each case each reactant flows through a horizontal region which is in contact with a heat-exchanger medium, and the temperature of the respective heat-exchanger media can be adjusted independently of one another;
(b) positioning, stacking and connection of the individual plates or layers in a suitable sequence.

8. Process for carrying out chemical reactions of at least 2 reactants which require different pre-process heat treatment, **characterized in that** one or more chemical reactants in gaseous or fluid form are separately pre-heated, mixed and brought to reaction in the horizontal chambers formed by two or more plates or layers stacked one on top of the other of a microreactor according to one of Claims 1 to 6.

## Revendications

1. Module fonctionnel (2) à utiliser en tant qu'échangeur de chaleur pour un microréacteur pour effectuer des réactions chimiques d'au moins deux réactants, **caractérisé en ce que**
(a) sur une couche supérieure (2a), il présente au moins deux systèmes de cannelures (30a, 30b) séparés l'un de l'autre, pouvant être garnis indépendamment chaque fois l'un de l'autre d'au moins deux milieux d'échangeurs de chaleur à température différente, et
(b) sur une couche inférieure (2b), il présente au moins deux systèmes de cannelures (40a, 40b) séparés l'un de l'autre, s'étendant parallèlement aux cannelures se trouvant sur la couche supérieure et chaque fois pouvant être garnis indépendamment l'un de l'autre d'au moins deux réactants gazeux et/ou liquides.

2. Microréacteur pour effectuer des réactions chimiques d'au moins deux réactants chimiques, la conduite chimique du processus se faisant dans des enceintes horizontales formées par trois ou plus plaques ou couches superposées les unes au-dessus des autres, lesdites plaques ou couches (2a, 2b, 3a, 3b, 4a, 4b) étant empilées les unes au-dessus des autres de manière que des canaux se forment et que des enceintes, s'étendant horizontalement, se forment pour la conduite chimique du processus, sachant que sont formés des modules fonctionnels (2, 3, 4) dans chacun desquels peuvent être accomplies des fonctions physiques ou chimiques, le premier module fonctionnel (2) étant configuré en échangeur de chaleur, **caractérisé en ce que**
(a) sur la couche supérieure (2a), il présente au moins deux systèmes de cannelures (30a, 30b) séparés l'un de l'autre, pouvant être garnis chaque fois indépendamment l'un de l'autre d'au moins deux milieux d'échangeur de chaleur à température différente, et
(b) sur la couche inférieure (2b), il présente au moins deux systèmes de cannelures (40a, 40b) séparés l'un de l'autre, s'étendant parallèlement aux cannelures se trouvant sur la couche supérieure et pouvant être garnis chaque fois indépendamment l'un de l'autre d'au moins deux réactants gazeux et/ou liquides.

3. Microréacteur selon la revendication 2, **caractérisé en ce que** sont prévus en tant que modules fonctionnels des échangeurs de chaleur séparés pour les réactants, des mélangeurs, des échangeurs de chaleur pour le passage conjoint des réactants, des circuits à temps de séjour, des filtres, des évaporateurs, des colonnes de distillation ou des colonnes d'extraction.

4. Microréacteur selon l'une des revendications 2 à 3, **caractérisé en ce que** les modules fonctionnels présentent des canaux (5) verticaux préparés devant assurer la liaison à des modules fonctionnels voisins.

5. Microréacteur selon l'une des revendications 2 à 4, **caractérisé en ce que** les modules fonctionnels (2, 3, 4) présentent des raccordements et/ou des capteurs logés pour assurer la détection de paramètres de processus, tels qu'une température, une pression, une vitesse d'écoulement, un débit volume ou un débit masse, une valeur de pH, soit dans la paroi du carter, soit dans différents modules fonctionnels.

6. Microréacteur selon l'une des revendications 2 à 5, **caractérisé en ce que** sont prévus des circuits de régulation, pour assurer la régulation du flux de matériau dans les raccordements fluidiques, ainsi que l'apport et l'évacuation d'énergie des modules fonctionnels.

7. Procédé de fabrication d'un microréacteur pour effectuer des réactions chimiques d'au moins deux réactants chimiques, selon l'une des revendications 2 à 6, comprenant les étapes ci-après :
(a) fabrication d'au moins trois plaques ou couches, dont les surfaces sont usinées d'après une technique de micro-usinage ou d'usinage fin, les plaques ou couches - conjointement avec la surface d'une autre plaque ou couche - présentant des enceintes de réaction horizontales, la première plaque étant conformée de manière que, chaque fois, l'écoulement de chaque réactant traverse une zone horizontale mise en contact avec un milieu d'échangeur de chaleur, et la température des milieux d'échangeur de chaleur respectifs pouvant être réglée indépendamment les unes des autres ;
(b) le positionnement, l'empilement et la liaison des différentes plaques ou couches, selon un ordre de succession approprié.

8. Procédé pour effectuer des réactions chimiques d'au moins deux réactants, demandant un traitement thermique pré-procédural différent, **caractérisé en ce qu'**un ou plusieurs réactants chimiques, se présentant sous forme gazeuse ou liquide, est ou sont pré-régulé(s) en température séparément, mélangés et mis en réaction dans les enceintes horizontales, formées de deux ou plus plaques ou couches empilées les unes au-dessus des autres, d'un microréacteur selon l'une des revendications 1 à 6.
